# EUROPEAN PATENT APPLICATION

(11) **EP 4 375 904 A1**
(43) Date of publication of application: **29.05.2024**
(21) Application number: 22209168.8
(22) Date of filing: 23.11.2022
(51) Int. Cl.: G06Q 20/10, G06Q 20/14, G06Q 20/32, G06Q 20/40, G07B 15/06, G07F 17/24

(54) **METHOD FOR A COMMUNICATION DEVICE, METHOD FOR USER EQUIPMENT, APPARATUS, VEHICLE AND COMPUTER PROGRAM**

(71) Applicant: Bayerische Motoren Werke Aktiengesellschaft, 80809 München (DE)
(72) Inventor: Ruemmelein, Lukas, 80797 München (DE); Mourad, Alaa, 80995 München (DE)

(57) **Abstract**

Embodiments relate to a method 100 for a communication device for improving a use of a payment service for a vehicle. The method 100 comprises receiving 110 sensor data indicative of an approach of user equipment associated with the vehicle. The method 100 further comprises transmitting 120, based on the approach, request data indicative of an identification request to the user equipment. Further, the method 100 comprises receiving 130 identification data indicative of an identification of the user equipment and generating 140 payment data indicative of a measure for the payment service based on the identification of the user equipment.

## Description

The present disclosure relates to the field of wireless communication. Embodiments relate to a method for a communication device, a method for user equipment, an apparatus, a vehicle and a computer program.

The toll collection, e.g., on highways, can be inconvenient because the user of the vehicle has to reach a terminal that is outside the vehicle. The same applies to payment systems associated with the vehicle, e.g., in a parking house. Thus, there may be a need to improve a use of a payment service for a vehicle.

It is therefore a finding that a use of a payment service for a vehicle can be improved by generating payment data indicative of a measure for payment. The payment data is generated based on an identification of user equipment associated with the vehicle. The identification of the user equipment is requested based on an approach of the user equipment. Thus, the communication between user equipment and communication device can be utilized to perform and/or verify the payment for the vehicle.

Examples provide a method for a communication device for improving a use of a payment service for a vehicle. The method comprises receiving sensor data indicative of an approach of user equipment associated with the vehicle. The method further comprises transmitting, based on the approach, request data indicative of an identification request to the user equipment. Further, the method comprises receiving identification data indicative of an identification of the user equipment and generating payment data indicative of a measure for the payment service based on the identification of the user equipment. By receiving sensor data an approach of the user equipment and thus of the vehicle can be determined. Based on the approach a request can be transmitted to the user equipment. By doing so an identification of the user equipment can be received. Based on the identification of the user equipment payment data can be generated, e.g., indicative of a payment status, a payment request. In this way, the communication device can perform a payment for the vehicle in a simplified way. Thus, the payment for the vehicle can be improved, e.g., without a need to reach a terminal.

In an example, the method may further comprise transmitting the payment data to the user equipment. In this way, the user equipment can receive the generated payment data. For example, the user equipment can display the payment data indicative of a requested approval of a payment. Thus, the user of the user equipment can make a payment for the vehicle in a simplified way.

In an example, the method may further comprise receiving, from the user equipment, acceptance data indicative of performed payment of the user of the user equipment. In this way, the communication device can be informed about a payment made. Thus, the communication device can trigger certain measures, e.g., lifting a barrier to allow the vehicle an onward journey.

In an example, the sensor data is determined by at least one sensor of a camera, a LIDAR sensor, a Bluetooth sensor or an ultra-wide band sensor. For example, by using sensor data of a camera the approach of the vehicle can be determined in the simplified way.

In an example, the method may further comprise determining the position of the user equipment. By determining the position of the user equipment a reliability can be increased.

Examples provide a method for user equipment for improving a use of a payment service for vehicle. The method comprises receiving request data indicative of an identification request. The request data is received from a communication device. Further, the method comprises transmitting identification data indicative of an identification of the user equipment. The identification data is transmitted to the communication device. In this way, the user equipment can provide the communication device with information needed to process a payment for the vehicle.

In an example, the method may further comprise transmitting sensor data indicative of the position of the user equipment to the communication device. In this way, a determination of an approach of the user equipment to the communication device to the communication device by the communication device can be improved.

Examples relate to an apparatus, comprising interface circuitry configured to communicate with at least one of a communication device or user equipment and processing circuitry configured to perform a method as described above. Examples relate to a vehicle, comprising an apparatus as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method for a communication device;
Fig. 2 shows an example of a method for user equipment; and
Fig. 3 shows a block diagram of an example of an apparatus.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

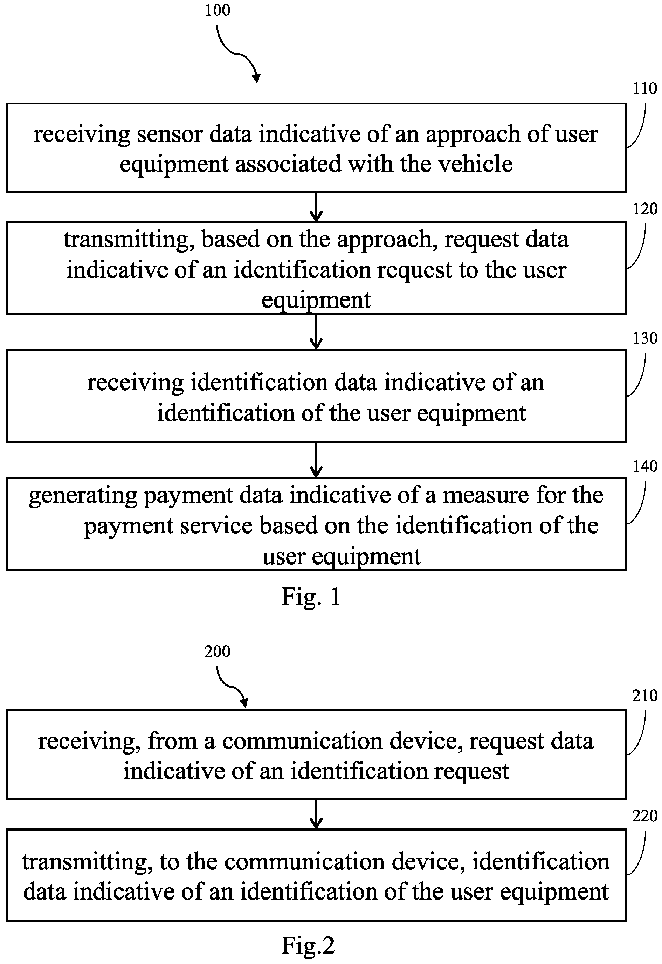

Fig. 1 shows an example of a method 100 for user equipment. The method 100 is for a communication device for improving a use of a payment service for a vehicle. The payment service may be any service for a vehicle for which a payment may be necessary, e.g., a usage of a toll road, a parking house. The method 100 comprises receiving 110 sensor data indicative of an approach of user equipment associated with the vehicle. The user equipment may be associated with the vehicle such that the user of the vehicle is the same as the user of the vehicle. For example, the user equipment may be bind to the vehicle, e.g., by use of a digital key. Optionally, the user equipment can be part of the vehicle, e.g., part of or may be an electronic control unit of the vehicle.

Alternatively, the user equipment may only be associated with vehicle such that both may have the same movement. For example, the user equipment can be inside of the vehicle, so that the movement of the user equipment can in principle be identical to the movement of the vehicle.

The method 100 further comprises transmitting 120, based on the approach, request data indicative of an identification request to the user equipment. Further, the method 100 comprises receiving 130 identification data indicative of an identification of the user equipment Transmitting 120 the request data and receiving 130 the identification data may be performed by an interface circuitry of the communication device.

The sensor data 110 can be received from the user equipment and/or from a sensor communicatively coupled to the communication device. The sensor data may comprise raw data of the sensor (e.g., the communication device may determine the approach based on the raw data) or processed sensor data (e.g., comprising information about a trajectory of the vehicle). The communication device may determine an approach of the user equipment and thus of the vehicle based on the received sensor data. If the sensor data may comprise information about the approach, e.g., a trajectory of the user equipment, a determination of the approach can be skipped, for example. For example, the user equipment can transmit sensor data indicative of a current route and/or a movement speed to the communication device. In this case, there may be no need for the communication device to determine the approach, e.g. the sensor data comprises the approach. An approach may be a relative movement of the user equipment relative to the communication device, which leads to a decreased distance between the user equipment and the communication device.

Transmitting 120 may be performed by an interface circuitry of the communication device. For example, the request data may be an identification request signal. The request data may be transmitted to the user equipment to request an identification from the user equipment. For example, if the communication device determines an approach of the user equipment, the communication device may need to know an identification of the user equipment to process the payment for the vehicle associated with the user equipment.

Further, the method 100 may comprise generating 140 payment data indicative of a measure for the payment service based on the identification of the user equipment. Generating 140 the payment data may be performed by a processing circuitry of the communication device. The payment data is generated 140 based on the identification of the user equipment. For example, the payment data may comprise information about a fee to be paid and/or a payment method 100 to pay the fee. In this way, a payment for the payment service can be done in a simplified way.

Optionally or alternatively, the payment data may be indicative of an allowance to use the payment service without further payment. For example, a user of the user equipment may have paid a flat fee to use the payment service. Thus, the communication device may generate 140 payment data to allow the usage of the payment service, e.g., to trigger a lift of a barrier. In this way, an access to the payment service for the vehicle can be provided in a simplified way.

The allowance to use the payment service may be based on the identification of the user equipment or additionally on the identification of the associated vehicle. For example, the flat fee may only be valid for a defined vehicle. In this case only user equipment bind to the vehicle may be accepted by the communication device for allowing the use of the payment service.

In contrast, in current toll collection systems the user has to stop and reach a terminal to pay the toll. This can be a process that involves another person, or it is done by a (payment) terminal. For the terminal contactless payment may be possible. However, in every case the driver has to reach the terminal outside of the vehicle. By using the communication device this process can be improved. A need to reach the terminal outside of the window of the vehicle can be omitted. Thus, the usage of the payment service can be facilitated, and the user experience can be increased. Further, the need of a separate hardware to be provided and installed in the vehicle can be omitted.

In an example, the method 100 may further comprise transmitting the payment data to the user equipment. For example, as described above the payment data may be indicative of a fee to be paid on/or a payment method to pay the fee. The user equipment can display the payment data, e.g., to receive an approval of the fee to be paid. In this way, the payment process can be facilitated. The user of the user equipment can be informed in advance of the fee to be paid and may decide whether he wants to use the payment service or not. Further, the user can check the payment method. In contrast, known systems scanning the number plate for automatic toll collection provide no feedback to the user. Further, the detection of the number plate is error-prone and susceptible to manipulation e.g., by manipulating the number plate. Thus, the communication device can improve a reliability of the payment service and/or can increase a user experience.

In an example, the method 100 may further comprise receiving, from the user equipment, acceptance data indicative of performed payment of the user of the user equipment. In this way, the communication device can be informed about a payment made. Thus, the communication device can trigger certain measures, e.g., lifting a barrier to allow the vehicle a usage of the payment service (such like an onward journey on a toll road).

In an example, the sensor data is determined by at least one sensor of a camera, a LIDAR sensor, a Bluetooth sensor or an ultra-wide band sensor. For example, a camera can be used to determine an approach of the vehicle. The vehicle can comprise the user equipment and the communication device can communicate with the user equipment part of the vehicle. The communication device can communicate wirelessly with the user equipment, e.g., using ultrawide-band communication, Bluetooth communication. Ultrawide-band technology may allow a precise location of an ultrawide-band compatible user equipment, for example. This may enable a user to approve the payment service inside of the vehicle.

The communication device system (e.g., part of a toll collection system) may be communicatively coupled to a ultrawide-band system comprising a receiver and transmitter. Thus, the approach of the user equipment can be determined in an improved way based on ultrawide-band. In an example, the method 100 may further comprise determining the position of the user equipment. For example, the position of the user equipment may be determined based on an ultrawide-band communication signal, e.g., on a received signal strength indication and/or on channel sounding.

In general, the user equipment and/or the communication device may be a device that is capable of communicating wirelessly. In particular, however, the user equipment may be a mobile user equipment, e.g., user equipment that is suitable for being carried around by a user or alternatively may be part of the vehicle. For example, the user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses. The communication device may be part of a payment service system.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for user equipment. The method 200 is for improving a use of a payment service for vehicle. The method 200 comprises receiving request data indicative of an identification request. The request data is received from a communication device, e.g., the communication device as described with reference to Fig. 1. The communication device as described with reference to Fig. 1 may be a counterpart of the user equipment. Further, the method 200 comprises transmitting 220 identification data indicative of an identification of the user equipment. The identification data is transmitted to the communication device. For example, the identification data may be indicative of a user of the user equipment, a user of the vehicle, an owner of the vehicle, an identification of the vehicle, an identification of the user equipment. Thus, the user equipment can transmit needed information to generate the payment data to the communication device.

In an example, the method 200 may further comprise transmitting sensor data indicative of the position of the user equipment to the communication device. For example, the user equipment can transmit a current route, movement speed, position to the communication device. The communication device can determine the approach based on the sensor data received from the user equipment. Alternatively, the sensor data may comprise the approach, e.g., the intention of the user equipment to use the payment service. In this case a determination of the approach by the communication device may be not needed. By transmitting the sensor data a generation of the payment data can be improved, since a reliability of the approach can be improved.

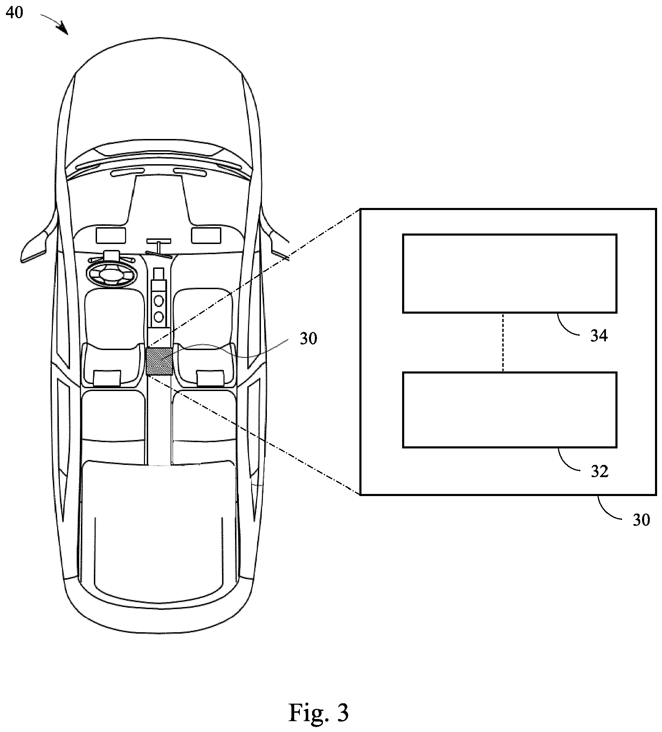

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3).

Fig. 3 shows a block diagram of an example of an apparatus 30, e.g., for a vehicle 40 or for user equipment. The apparatus 30 comprises interface circuitry 32 configured to communicate a communication device and/or user equipment and processing circuitry 34 configured to perform a method as described above, e.g., the method for a communication device as described with reference to Fig. 1, or the method for user equipment as described with reference to Fig. 2. For example, the apparatus 30 may be part of the vehicle 40, e.g., part of a control unit of the vehicle 40 or may be part of a payment service system.

For example, the vehicle 40 may be a land vehicle, such a road vehicle, a car, an automobile, an off-road vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 3 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
40 vehicle
100 method for a communication device
110 receiving sensor data indicative of an approach of user equipment
120 transmitting request data
130 receiving identification data
140 generating payment data
200 method for user equipment
210 receiving request data
220 transmitting identification data

## Claims

1. A method (100) for a communication device for improving a use of a payment service for a vehicle, comprising:
receiving (110) sensor data indicative of an approach of user equipment associated with the vehicle;
transmitting (120), based on the approach, request data indicative of an identification request to the user equipment;
receiving (130) identification data indicative of an identification of the user equipment; and
generating (140) payment data indicative of a measure for the payment service based on the identification of the user equipment.

2. The method (100) according to claim 1, further comprising
transmitting the payment data to the user equipment.

3. The method (100) according to claim 2, further comprising
receiving, from the user equipment, acceptance data indicative of a performed payment of a user of the user equipment.

4. The method (100) according to any one of the preceding claims, wherein
the sensor data is determined by at least one sensor of a camera, a LIDAR sensor, a Bluetooth sensor or an ultra-wide band sensor.

5. The method (100) according to any one of the preceding claims, further comprising determining the position of the user equipment.

6. A method (200) for user equipment for improving a use of a payment service for a vehicle,
receiving (210), from a communication device, request data indicative of an identification request; and
transmitting (220), to the communication device, identification data indicative of an identification of the user equipment.

7. The method (200) according to claim 6, further comprising
transmitting sensor data indicative of a position of the user equipment to the communication device.

8. An apparatus (30), comprising:
interface circuitry (32) configured to communicate with at least one of a communication device or user equipment; and
processing circuitry (34) configured to perform a method (100; 200) according to any one of the preceding claims.

9. A vehicle comprising the apparatus according to claim 8.

10. A computer program having a program code for performing the method (100; 200) according to claim 1 - 8, when the computer program is executed on a computer, a processor, or a programmable hardware component.
